# EUROPEAN PATENT APPLICATION

(11) **EP 0 848 256 A1**
(43) Date of publication of application: **17.06.1998**
(21) Application number: 97119977.3
(22) Date of filing: 14.11.1997
(51) Int. Cl.: G01P 3/44

(54) **An impulse ring for devices for gauging the revolving speed of a vehicle wheel hub**

(30) Priority: 12.12.1996 IT TO961012
(71) Applicant: SKF INDUSTRIE S.p.A., I-10128 Torino (IT)
(72) Inventor: Vignotto, Angelo, 10134 Torino (IT); Peretti, Pietro Antonio, 10060 Piscina (Torino) (IT)
(74) Representative: Di Francesco, Gianni

(57) **Abstract**

An impulse ring (20) for devices for gauging the rotational speed of a vehicle wheel hub, the impulse ring comprising:
an annular mount portion (22) mounted on a cylindrical outer surface (11) of the bearing outer rotating race (10); and
a plurality of teeth (21) axially extending from the annular portion (22) and radially facing a sensor mounted to a fixed part of the vehicle.
   The impulse ring consists of a sheet body with a resiliently yieldable coating (30) which covers at least the surface of the teeth facing the sensor and fills the spaces (23) between the teeth (21). Preferably, the teeth (21) are completely covered by the coating (30), such that the coating also covers the radially inner surface of the teeth.

## Description

### Field of the invention

The present invention falls within the field of impulse rings for devices for gauging the revolving speed of a vehicle wheel hub. More particularly, the invention relates to an impulse ring of the type comprising a body of substantially cylindrical or annular shape mounted to a rotating element of the hub bearing, wherein a plurality of circumferentially equally spaced teeth or apertures are provided radially facing a sensor mounted to a fixed part of the vehicle.

### Background of the invention

At present there are known various kinds of impulse rings or encoders made up of a metallic sintered material. Impulse rings of this kind are generally thin tubular bodies comprising an annular mount portion that is interference fitted onto the rotating race of the bearing. From said annular portion a plurality of axially oriented teeth extends so as to radially face a sensor mounted to the standard supporting the vehicle wheel. This arrangement has the disadvantage of being expensive from a constructional point of view.

An attempt has been made in order to make impulse rings out of sheet, which is a less expensive material, but the projecting teeth of sheet impulse rings are easily deformed due to the crashes caused by pebbles or other objects that frequently hit these devices, which are located proximate to the wheels of the vehicle.

In order to obviate such constructional weakness, there have been proposed impulse rings having window-shaped apertures instead of protruding teeth. The windows are closed by a circumferential rim that is radially folded over the end portion of the bearing race on which the impulse wheel is fixed. The folding is necessary to space the circumferential rim of the impulse wheel apart from the sensor, as such a continuous edge considerably reduces the intensity of the magnetic pulses generated by the empty and full parts of the windows alternately facing the sensor as the hub rotates.

Another inconvenience with such a prior art arrangement is that the rim being folded over the front side of the rotating race takes away part of the axial gap, already rather narrow per se, between the bearing and the wheel supporting standard to which the sensor is mounted. Further, the folding of said rim involves a part the windows being curved, whereby the sensor is not able to detect the curved, end portions of the windows. Therefore, part of the reading zone is useless. On the contrary, it is desirable to exploit the full size of the windows. As there is little space available, the geometry of the impulse ring must be optimised so as to gain a clear and strong magnetic pulse to be detected by the sensor.

Another drawback, that is common to all kinds of conventional impulse rings, concerns corrosion due to water that can easily reach the zone where these rings are located. In addition, proper operation of the impulse ring is likely to be adversely affected by dust and mud encrustations that tend to partially or completely close the windows or the spaces between the teeth, thereby reducing the strength of the magnetic pulses detected by the sensor.

A further inconvenience with conventional speed measurement devices is the risk of the sensor getting damaged by crashes or by being mounted badly such that it comes in contact with the metal teeth or windows of the near impulse ring.

### Summary of the invention

Against the foregoing background, it is the object of the present invention to provide an improved impulse ring capable of overcoming the above prior art drawbacks.

In accordance with one aspect of the invention as claimed, this object is accomplished by the provision of an impulse ring for devices for gauging the rotational speed of a vehicle wheel hub, the impulse ring comprising:
an annular mount portion mounted on a cylindrical outer surface of the bearing outer rotating race; and
a plurality of teeth axially extending from said annular portion and radially facing sensor means mounted to a fixed part of the vehicle,
   characterised by consisting of a sheet body with a resiliently yieldable coating which covers at least the surface of the teeth facing said sensor means and fills the spaces between said teeth.

Preferably, the teeth are completely covered by said coating, such that the coating also covers the radially inner surface of the teeth.

### Brief description of the drawings

In order that the present invention may be well understood there will now be described a preferred embodiment thereof, given by way of example, reference being made to the accompanying drawings, in which:
- FIG. 1: is an axial sectional view of a vehicle wheel hub bearing assembly fitted with an impulse ring in accordance with the present invention;
- FIG. 2: is a top view to an enlarged scale of the impulse ring of FIG. 1, as seen in the direction of arrow II; and
- FIGS. 3 and 4: are two axial cross sectional views along the lines III-III and IV-IV, respectively, of FIG. 2.

### Detailed description of a preferred embodiment

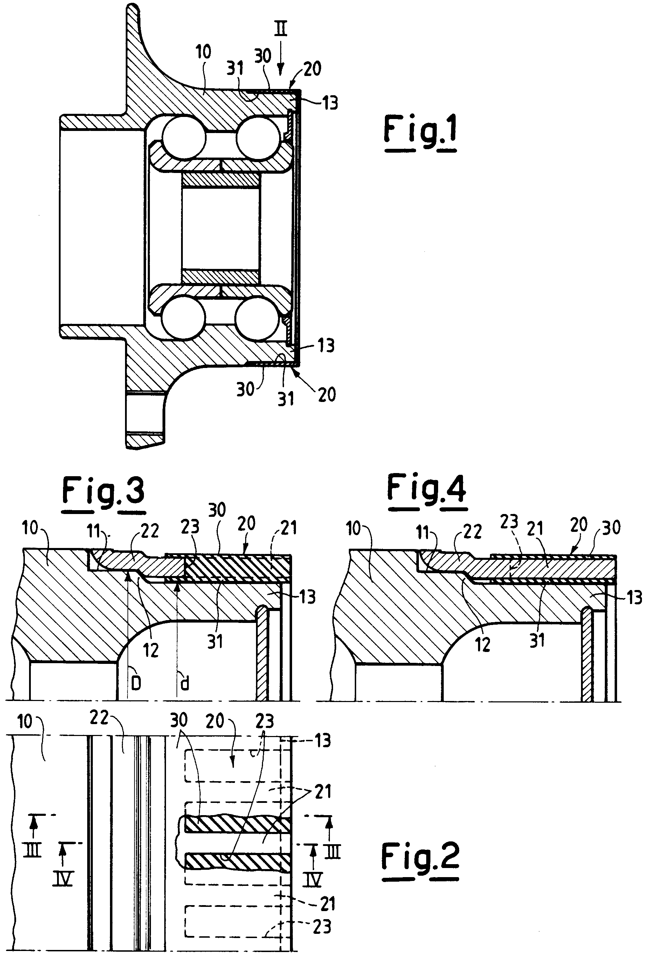

With reference initially to FIG. 1, numeral 10 designates the radially outer, rotating race of a bearing for a motor vehicle wheel hub. An impulse ring 20 is fitted on the radially outer surface 11 of outer race 10 on the side facing the inboard of the vehicle. Referring to FIGS. 3 and 4, a sensor body of conventional design (not shown in the drawings) is fixed to the wheel standard (not shown) so as to radially face teeth 21 formed in the impulse ring 20. The impulse ring of the present invention is a sheet body of substantially cylindrical shape comprising an annular mount portion 22. A plurality of axially oriented teeth 21 extend from annular portion 22. Teeth 21 are equally spaced in the circumferential direction so as to provide a corresponding alternate succession of empty spaces 23. Preferably, the circumferential dimension of the empty spaces 23 is comparable to that of the teeth 21 and the thickness of the sheet which the impulse ring 20 is made of.

The annular portion 22 of impulse ring 20 is interference fitted onto the outer cylindrical surface 11 of the bearing race 10 which forms a step 12 of slightly greater diameter than that of an axial end flange or spigot 13 of race 10. The mounting of the impulse ring on the cylindrical surface 11 guarantees centring of the impulse ring with respect to the rotation axis of the bearing.

Still in accordance with the present invention, the impulse ring has a coating of a resiliently yieldable material, for example rubber, thermoplastic rubber, DELRIN or NYLON; such a coating, designated overall with 30, is injection-moulded over the teeth 21 of the impulse ring so as to cover at least the radially outwardly parts of the teeth facing in use the sensor (not shown) and fill the spaces 23 between the teeth 21. The coating binds the teeth together and renders the impulse ring more resistant, while protecting same from crashes, for example caused by pebbles hitting the vehicle wheel and the parts near it. In the preferred embodiment shown in the drawings, the toothed end portion 21 of the impulse ring is completely covered by the coating, i.e. also under the radially inner surface of the teeth, so as to dampen vibration of the toothed part, reduce noise and prevent from corrosion.

The coating that fills the spaces between the teeth allows to eliminate the circumferential rim provided with conventional window-shaped impulse rings and the relevant inconveniences outlined in the introductory part of the present description.

As apparent from FIGS. 3 and 4, owing to the fact that the teeth 21 extend to the axial end of the impulse ring and terminate with a sharp cut, the impulse ring has a sharp and clearly defined succession of full parts and empty spaces up to said end, whereby the sensor is able to exploit the full axial length of the toothed impulse wheel, including the part nearest the standard (not shown). This provides a clear advantage as compared to conventional systems in which the axial end portion of the impulse ring gives no contribution to the signal or even hinders it.

The coating on the radially outer surface of the teeth considerably reduces the risk of the sensor being damaged, should this be accidentally pushed against the impulse wheel owing to a crash or defective mounting. In such a case, however, the sensor will hit the soft covering instead of the metal of the impulse ring. Particularly, in a preferred embodiment of the present invention, the thickness of the radially innermost layer 31 is chosen such that the impulse ring is fitted to the bearing race with a slight radial interference, so as to remain slightly compressed between the teeth 21 and the axial spigot 13 of the bearing. This compression provokes a slight swelling of the coating in the spaces 23 between the teeth. The outer surface of the coating will so have slight undulations. As a result, should the sensor come in contact with the impulse ring, the first contact will anyway be discontinuous and therefore cause less damage to the sensor, as contact will be made with said soft swollen parts of the covering. In any case, it is unlikely that such a contact will cause an immediate breakdown of the sensor. The continuous contact between the sensor and the coating will provoke an error in the measurement of rotational speed, which will be immediately apparent to the driver from the on-board instrument to which the sensor is connected. As a result, the user will be able to get the sensor serviced as soon as discovers such an error on the on-board instrumentation, and will still have a good chance that the sensor has not yet been damaged irreparably.

Still referring to FIGS. 3 and 4, in the preferred embodiment the diameter D of the outer cylindrical surface 11 of race 10 on which the annular portion 22 of impulse wheel is fitted is greater or smaller than, but not equal to, the diameter d of the spigot 13, so as to make the force-fitting of the impulse ring on the bearing and the injection-moulding of the coating on teeth 21 more simple.

As apparent from FIGS. 2, 3 and 4, the end portions of the teeth 21 can axially project beyond the axial spigot 13 in the direction of the wheel supporting standard (not shown) in order to exploit the reading surface as much as possible.

While a specific embodiment of the invention has been disclosed, it is to be understood that such disclosure has been merely for the purpose of illustration and that the invention is not to be limited in any manner thereby. Various modifications will be apparent to those skilled in the art in view of the foregoing example. The scope of the invention is to be limited only by the appended claims.

## Claims

1. An impulse ring (20) for devices for gauging the rotational speed of a vehicle wheel hub, the impulse ring comprising:
an annular mount portion (22) mounted on a cylindrical outer surface (11) of the bearing outer rotating race (10); and
a plurality of teeth (21) axially extending from said annular portion and radially facing a sensor means mounted to a fixed part of the vehicle,
characterised by consisting of a sheet body with a resiliently yieldable coating (30) which covers at least the surface of the teeth (21) facing said sensor means and fills the spaces (23) between said teeth (21).

2. An impulse ring as claimed in claim 1, characterised in that said teeth (21) are completely covered by said coating (30), such that the coating also covers the radially inner surface of said teeth.

3. An impulse ring as claimed in claim 2, characterised in that said the thickness of the layer (31) of the coating (30) covering said radially inner surface of the teeth (21) is so dimensioned as to mount the impulse ring onto the outer bearing race (10) with a slight radial interference, whereby said inner layer (31) remains slightly compressed between the teeth (21) and the bearing.

4. An impulse ring as claimed in claim 1, characterised in that said teeth (21) terminate proximate to the spigot (13) of the outer bearing race (10).

5. An impulse ring as claimed in claim 4, characterised in that said teeth (21) project axially over said spigot (13).

6. An impulse ring as claimed in claim 1, characterised in that said teeth (21) are circumferentially equally spaced so as to be alternating with a succession of a corresponding plurality of empty spaces (23), said empty spaces having a circumferential dimension comparable to that of the teeth (21) and the thickness of the sheet of which the impulse ring (20) is made of.

7. An impulse ring as claimed in any of the preceding claims, characterised in that said annular mount portion (22) is interference fitted over a cylindrical surface (11) of the bearing, the diameter (D) of said cylindrical surface (11) being different from the diameter (d) of the axial spigot (13) of the bearing race surrounded by said teeth (21).

8. An impulse ring as claimed in claim 1, characterised in that said resiliently yieldable coating is made up of a plastic material moulded over said teeth (21) of the impulse ring.

9. An impulse ring as claimed in claim 1, characterised in that said resiliently yieldable coating is made up of a rubber-like material.
